# FASCICULE DE BREVET EUROPEEN

(11) **EP 2 097 971 B1**
(45) Date de publication et mention de la délivrance du brevet: **01.09.2010**
(21) Numéro de dépôt: 08750465.0
(22) Date de dépôt: 04.01.2008
(51) Int. Cl.: H02P 1/42, H02P 25/04

(54) **COMMANDE D'UN MOTEUR ASYNCHRONE**
ASYNCHRONMOTOR-STEUERUNG
ASYNCHRONOUS MOTOR CONTROL

(30) Priorité: 05.01.2007 FR 0752532
(43) Date de publication de la demande: 09.09.2009
(73) Titulaire: STMicroelectronics SA, 92120 Montrouge (FR)
(72) Inventeur: GONTHIER, Laurent, F-37000 Tours (FR); ACHART, Raynald, F-37230 Pernay (FR)
(74) Mandataire: de Beaumont, Michel
(86) Numéro de dépôt international: PCT/FR2008/050010
(87) Numéro de publication internationale: WO 2008/096090

(56) Documents cités:
- JP-A- 5 220 290
- JP-A- 7 213 083
- JP-A- 2006 020 498

## Description

### Domaine de l'invention

La présente invention concerne de façon générale les moteurs asynchrones et, plus particulièrement, la commande en vitesse et en sens de rotation d'un moteur alimenté par une tension alternative.

### Exposé de l'art antérieur

Généralement, les dispositifs de commande de moteurs asynchrones requièrent un commutateur bipolaire de type relais pour inverser le sens de rotation du moteur. Cela accroît la consommation du système car, pour un des deux sens de rotation, un courant doit alimenter la bobine du relais en permanence.

Par ailleurs, les relais électromécaniques engendrent du bruit et des perturbations électromagnétiques, sont souvent coûteux, et nuisent à l'intégration des dispositifs de commande.

Pour cette raison, le document JP5220290 décrit un circuit pour commander la vitesse d'un moteur asynchrone monophasé. Il y a quatre commutateurs à semi-conducteurs, en particulier TRIAC, pour contrôler le courant dans les enroulements principales et les enroulements auxiliaires.

### Résumé de l'invention

La présente invention vise à pallier tout ou partie des inconvénients des systèmes de commande multivitesse et à inversion de sens d'un moteur asynchrone.

L'invention vise plus particulièrement à éviter le recours à une commande à relais pour inverser le sens de rotation du moteur.

Pour atteindre tout ou partie de ces objets ainsi que d'autres, la présente invention prévoit un dispositif de commande en vitesse et en sens de rotation d'un moteur asynchrone selon la revendication 1, ayant :
un premier circuit de deux commutateurs bidirectionnels commandables individuellement dont des premières bornes de conduction sont reliées à une borne commune d'application d'un potentiel continu et dont deux deuxièmes bornes de conduction sont aptes à être respectivement reliées à des premières extrémités d'enroulements du stator du moteur ; et
un deuxième circuit d'au moins deux commutateurs bidirectionnels en parallèle et commandables individuellement, dont des premières bornes de conduction respectives sont reliées à la borne commune, les premier et deuxième circuits étant connectés en série.

Selon un mode de réalisation de la présente invention, un des commutateurs bidirectionnels du deuxième circuit a sa deuxième borne de conduction directement reliée à une borne d'application d'une tension alternative, les autres commutateurs bidirectionnels du deuxième circuit ayant leurs deuxièmes bornes de conduction respectives reliées, par une impédance, à cette borne d'application de la tension alternative.

Selon un mode de réalisation de la présente invention, les commutateurs bidirectionnels du deuxième circuit ont leurs deuxièmes bornes de conduction respectives reliées, par une impédance, à une borne d'application de la tension alternative.

Selon un mode de réalisation de la présente invention, le nombre de commutateurs bidirectionnels du deuxième circuit est égal au nombre de vitesses de rotation souhaitées pour le moteur moins une, une impédance reliant directement la borne commune à la borne d'application de la tension alternative.

Selon un mode de réalisation de la présente invention, le nombre de commutateurs bidirectionnels du deuxième circuit est égal au nombre de vitesses de rotation souhaitées pour le moteur.

Selon un mode de réalisation de la présente invention, des deuxièmes extrémités respectives des enroulements du moteur sont aptes à être connectées ensemble à une autre borne d'application de la tension alternative, un élément capacitif reliant leurs premières extrémités respectives.

Selon un mode de réalisation de la présente invention, chaque impédance inclut au moins un élément capacitif en parallèle avec un élément résistif.

Selon un mode de réalisation de la présente invention, lesdits commutateurs bidirectionnels sont des triacs dont les cathodes sont directement reliées à la borne commune.

Selon un mode de réalisation de la présente invention, des bornes de commandes respectives des commutateurs bidirectionnels sont aptes à être reliées à des bornes de sortie d'un circuit de commande fournissant des signaux à deux états.

L'invention prévoit également un appareil ayant un moteur asynchrone apte à être alimenté par une tension alternative et un dispositif de commande en sens et en vitesse de rotation, dans lequel des premières extrémités respectives d'enroulements du stator du moteur sont connectées aux premières bornes de conduction respectives des commutateurs du premier circuit.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un exemple d'architecture habituelle de commande d'un moteur asynchrone alimenté par une tension alternative ;
la figure 2 représente un exemple de schéma électrique habituel d'un dispositif de commande d'un moteur respectant l'architecture de la figure 1 ;
la figure 3 représente un mode de réalisation d'un schéma électrique détaillé d'un dispositif de commande en vitesse et en sens de rotation d'un moteur asynchrone selon la présente invention ;
la figure 4 représente, partiellement, une variante du dispositif de la figure 3 ;
la figure 5 représente, partiellement, une autre variante du dispositif de la figure 3 ; et
la figure 6 représente, de façon très schématique et sous forme de blocs, les fonctions du dispositif de commande de la figure 3.

De mêmes éléments ont été désignés par de mêmes références aux différentes figures. Par souci de clarté, seuls les éléments utiles à la compréhension de l'invention ont été représentés et seront décrits. En particulier, les applications d'un moteur asynchrone commandé par un dispositif selon l'invention n'ont pas été détaillées, celles-ci étant compatibles avec la commande de tout moteur asynchrone multipolaire.

### Description détaillée

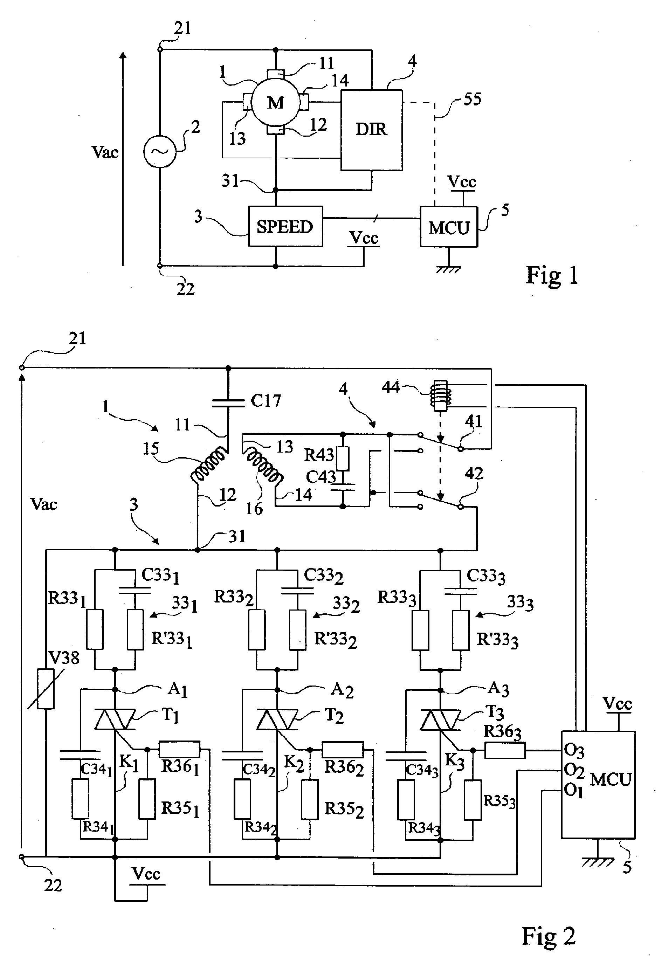

La figure 1 représente, de façon très schématique et sous forme de blocs, un exemple d'architecture habituelle de commande d'un moteur asynchrone 1 (M) alimenté par une tension alternative Vac, par exemple la tension du réseau de distribution électrique 2. Il s'agit d'un moteur de ventilateur à plusieurs vitesses et capable de fonctionner dans les deux sens (aspiration-soufflerie). Dans l'exemple représenté, le stator du moteur a quatre pôles.

Deux extrémités 11 et 12 d'un premier enroulement du stator sont respectivement reliées à une borne 21 d'application de la tension Vac et à une première borne 31 d'un circuit 3 (SPEED) de sélection de vitesse dont l'autre borne est connectée à l'autre borne 22 d'application de la tension Vac. Deux extrémités 13 et 14 d'un deuxième enroulement du stator sont reliées à un circuit 4 (DIR) d'inversion de sens de rotation, alimenté entre la borne 21 et la borne 31. Le circuit de sélection de vitesse 3 reçoit plusieurs consignes (autant que de vitesses possibles) d'une unité de commande 5 (par exemple, un microcontrôleur MCU) alimentée par une basse tension continue Vcc. L'unité 5 commande aussi généralement le système d'inversion de sens de rotation (liaison pointillée 55). Pour des questions de référence de tension qui seront mieux comprises de l'exposé qui va suivre en relation avec la figure 2, la borne 22 correspond à la borne d'application du potentiel positif Vcc.

La figure 2 représente un exemple de schéma électrique habituel d'un dispositif de commande d'un moteur 1 respectant l'architecture de la figure 1. Les deux enroulements 15 et 16 du stator ont été schématisés par des inductances. Un enroulement 15 a une extrémité 11 reliée, par l'intermédiaire d'un élément capacitif C17 fixant le déphasage entre les alimentations des enroulements, à la borne 21 et son autre extrémité 12 est reliée à la borne 31 du circuit 3 de réglage de vitesse. Ce circuit 3 est réalisé à partir de triacs T1, T2 et T3 respectivement en série avec des cellules 33₁, 33₂ et 33₃ modifiant plus ou moins, selon le triac rendu passant, l'impédance en série avec les enroulements du moteur pour modifier sa vitesse de rotation. Chaque cellule 33 inclut, en parallèle, une résistance R33ᵢ (i étant ici compris entre 1 et 3) et l'association en série d'un élément capacitif C33ᵢ et d'une résistance R'33ᵢ. La variation d'impédance est principalement assurée par les éléments capacitifs, les résistances pouvant être identiques d'une cellule à l'autre. Les résistances R'33ᵢ servent principalement à limiter le courant d'appel au démarrage. Les résistances R33ᵢ servent à décharger l'élément capacitif d'une cellule quand elle n'est plus utilisée. Les résistances R33ᵢ ont des valeurs supérieures aux résistances R'33ᵢ (dans un rapport d'au moins 5). Les cellules sont reliées d'une part à la borne 31 et d'autre part à l'anode Aᵢ du triac Ti correspondant. La cathode Kᵢ de chaque triac Ti est reliée directement à la borne 22, également reliée à une borne d'application d'un potentiel positif Vcc. Par ailleurs, l'anode Aᵢ de chaque triac peut être reliée à sa cathode par un condensateur C34ᵢ en série avec une résistance R34ᵢ pour limiter les fronts de tension lors de l'extinction du triac considéré. Enfin, la gâchette de chaque triac est reliée, d'une part à une sortie Oᵢ du microcontrôleur 5 par une résistance R36ᵢ de conversion tension-courant, et d'autre part à sa cathode (donc à la borne 21) par une résistance R35ᵢ.

La commande en sélection de vitesse s'effectue en sélectionnant celui des triacs T1, T2 ou T3 qui est commandé par le microcontrôleur 5. Pour permettre la circulation d'un courant de gâchette et commander les triacs, la tension Vcc est appliquée sur leurs cathodes pour fournir une référence de tension positive et les résistances optionnelles R35ᵢ assurent une différence de potentiel gâchette-cathode désensibilisant la commande de gâchette.

Le cas échéant, un élément d'écrêtage de la tension aux bornes du circuit de sélection de vitesse 3 (par exemple, une varistance R38) relie les bornes 31 et 22.

Côté circuit 4 d'inversion du sens de rotation du moteur, l'autre enroulement 16 du stator a ses extrémités 13 et 14 respectivement reliées aux bornes d'un commutateur bipolaire dont un premier pôle 41 est relié à la borne 21 et dont un deuxième pôle 42 est relié à la borne 31. Dans une première position, le commutateur relie la borne 41 à l'extrémité 13 de l'enroulement et la borne 42 à l'extrémité 14 de l'enroulement 16. Dans une deuxième position, l'extrémité 14 est reliée à la borne 21 tandis que l'extrémité 13 est reliée à la borne 31 de façon à inverser le courant dans l'enroulement, donc le sens de rotation du moteur. Une résistance R43 en série avec un condensateur C43 entre les bornes 13 et 14 limite les surtensions lors des commutations. Le commutateur est du type à relais et est commandé par une bobine 44 dont les deux extrémités sont, par exemple, alimentées à partir du microcontrôleur 5.

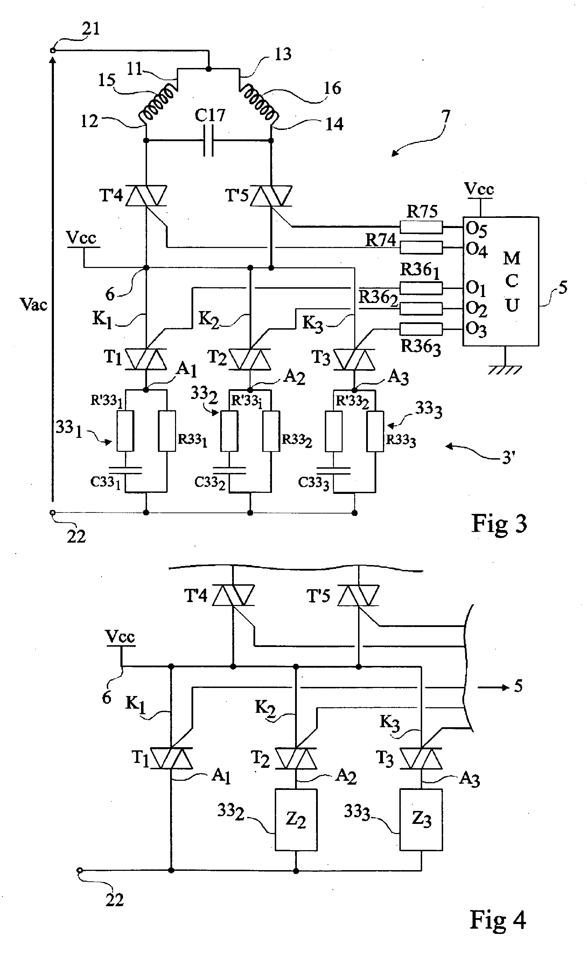

La figure 3 représente le schéma électrique équivalent d'un dispositif de commande d'un moteur asynchrone selon un mode de réalisation de la présente invention.

Deux enroulements 15 et 16 du stator, déphasés, permettent de commander le moteur dans un sens ou dans un autre, et une variation de vitesse est obtenue au moyen de commutateurs bidirectionnels, par exemple, des triacs.

Selon ce mode de réalisation de l'invention, des premières extrémités respectives 12 et 14 des enroulements 15 et 16 du stator du moteur 1 sont chacune reliées à l'anode d'un triac T'4 ou T'5 d'un circuit 7 de sélection du sens de rotation du moteur. Les gâchettes respectives des triacs T'4 et T'5 sont, par exemple, reliées à des bornes de sortie 04 et 05 d'un microcontrôleur 5 (MCU), ou autre circuit de commande capable de fournir des signaux de tension adaptés, par des résistances R74 et R75. Les extrémités 12 et 14 sont par ailleurs reliées l'une à l'autre par un élément capacitif C17 de déphasage.

Les cathodes respectives des triacs T'4 et T'5 sont reliées à une borne 6 de référence commune du dispositif de commande. Cette borne 6 reçoit un potentiel continu Vcc (typiquement le potentiel plus positif d'une tension continue Vcc, de préférence, la même que celle alimentant l'unité 5) et est reliée directement aux cathodes de triacs T1, T2 et T3 d'un circuit 3' de sélection de vitesse. Le nombre de triacs servant à la commande de vitesse a été fixé arbitrairement à 3. Ce nombre peut être modifié en fonction du nombre de vitesses différentes souhaitées. Les anodes respectives des triacs T1, T2 et T3 sont reliées à une borne 22 d'application d'une tension alternative Vac par des cellules 33₁, 33₂ et 33₃ respectivement, modifiant l'impédance en série avec les enroulements. Chaque cellule 33ᵢ (i étant compris entre 1 et 3 dans cet exemple) est, par exemple, constituée d'une association en parallèle d'une résistance R33ᵢ de réinitialisation (déchargement) de la cellule, avec une association en série d'un élément capacitif C33ᵢ et d'une résistance R'33ᵢ de limitation du courant d'appel. Les gâchettes respectives des triacs T1, T2 et T3 sont reliées à des bornes de sortie O1, 02 et 03 du microcontrôleur 5 par des résistances de conversion tension-courant R36₁, R36₂ et R36₃.

Des deuxièmes extrémités respectives 11 et 13 des deux enroulements 15 et 16 du stator du moteur sont reliées ensemble à une autre borne 21 d'application de la tension alternative Vac.

Selon le triac T'4 ou T'5 rendu passant par le microcontrôleur 5, le courant d'alimentation du moteur passe par l'un ou l'autre des enroulements 15 ou 16 du stator, ce qui conditionne la vitesse de rotation du moteur.

Côté variation de vitesse, la commande reprend un principe de fonctionnement du circuit 3 de la figure 2, si ce n'est que les triacs sont inversés (leurs cathodes sont désormais côté circuit 7 pour être communes avec celles des triacs T'4 et T'5).

Le cas échéant, des résistances (R34ᵢ, figure 2) et condensateurs (C34ᵢ, figure 2) non représentés en figure 3 peuvent être prévus en parallèle avec chaque triac T1, T2, T3 pour limiter les fronts de tension à l'ouverture.

Des résistances (R35ᵢ, figure 2) imposant une différence de potentiel entre cathode et gâchette des triacs Ti peuvent également être prévues.

De même, un élément d'écrêtage (R38, figure 2) de la tension aux bornes du circuit 3' peut être prévu.

La figure 4 représente le schéma électrique partiel d'une variante de réalisation. L'une des cellules 33i (dans cet exemple, la cellule 33₁) est omise, le triac Ti correspondant servant alors à la commande du moteur dans sa vitesse maximale de rotation. Pour le cas où des résistances R34i et condensateurs C34ᵢ sont prévus dans le circuit, ils ne le sont pas pour le triac (T1) dont l'anode est reliée directement à la borne 22. Les impédances Zᵢ conditionnant les autres vitesses de rotation ont été symbolisées par des blocs 33ᵢ. Les autres éléments du dispositif sont similaires à ceux décrits en relation avec la figure 3.

A titre d'exemple particulier de réalisation, un dispositif de commande tel qu'illustré par la figure 4 a été réalisé avec les composants suivants :
R36₁, R36₂, R36₃, R74 et R75 = 130 ohms ;
R33i = 100 kohms ;
R'33i = 47 ohms ;
C33₂ = 5 microfarads ;
C33₃ = 6 microfarads ;
C33₁ = R33₁ = R'33₁ = 0 (pas de cellule 33₁) ; et
C17 = 4,5 microfarads.

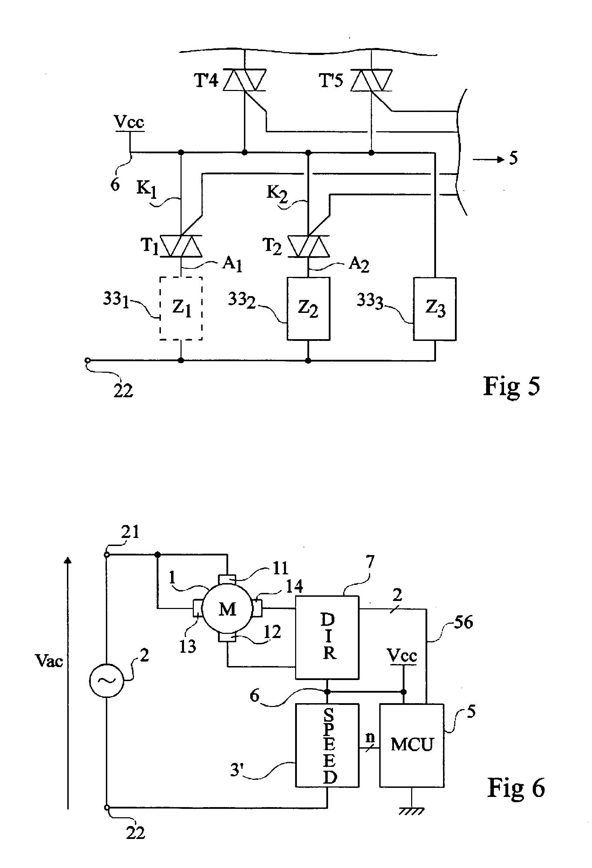

La figure 5 représente le schéma électrique partiel d'une autre variante. L'un des triacs Ti (par exemple le triac T3, figure 3) est remplacé par un court-circuit, la cellule 33ᵢ correspondante étant maintenue et fixant une vitesse par défaut de rotation du moteur. Cette vitesse est alors adaptée, par exemple, par les deux autres branches de triacs.

Les variantes des figures 4 et 5 sont combinables (absence de la cellule bloc 33₁ symbolisée par un bloc en pointillés en figure 5).

La figure 6 représente, de façon très schématique et sous forme de blocs, l'architecture fonctionnelle du dispositif de la figure 3.

Un point de référence commun 6 est prévu entre un premier circuit 7 (DIR) à commutateurs bidirectionnels de sélection du sens de rotation du moteur et un deuxième circuit 3' (SPEED) à commutateurs bidirectionnels de commande en vitesse de rotation du moteur. Les circuits 7 et 3' sont donc connectés en série. Le circuit 7 est commandé par deux signaux basse tension (liaison 56) provenant d'une unité de commande 5 (MCU) alors que le circuit 3' est commandé par n signaux provenant de l'unité 5 en fonction du nombre de vitesses possibles. Le point 6 est relié à un potentiel continu Vcc.

Les commutateurs bidirectionnels du circuit de sélection de sens et du circuit de sélection de vitesse sont donc en série avec leurs cathodes interconnectées.

Un avantage de la présente invention est que les sorties de l'unité de commande peuvent être uniformes. Par ailleurs, l'intégration du dispositif est facilitée grâce à la structure à cathode commune.

Un autre avantage de la présente invention est qu'elle évite la consommation de la bobine d'un relais. Par ailleurs, l'absence de relais électromagnétiques de commande réduit les parasites et les bruits électromagnétiques.

Parmi les applications possibles du circuit de commande de l'invention, on notera les moteurs de ventilateur, les moteurs de machine à laver ou de sèche-linge, les moteurs de ventilateur de systèmes de climatisation, les moteurs de pompe à vide ou d'aspirateur, etc.

Bien entendu, la présente invention est susceptible de diverses variantes et modifications qui apparaîtront à l'homme de l'art. En particulier, bien que l'invention ait été décrite plus particulièrement en relation avec un exemple utilisant des triacs, sa transposition à une réalisation à base de n'importe quelle architecture de commutateurs bidirectionnels est à la portée de l'homme du métier à partir des indications fonctionnelles données ci-dessus. Par exemple, on pourra utiliser pour chaque commutateur un montage de deux thyristors tête-bêche en parallèle, l'un des deux étant associé à un élément de commande (optocoupleur, transformateur d'impulsions, etc.) permettant une commande par un seul signal. Le triac reste cependant préférable. On pourra également utiliser des commutateurs bidirectionnels de puissance dont la borne de commande est référencée à une électrode de puissance se trouvant sur la face opposée à celle portant l'électrode de commande, par exemple, des commutateurs connus sous la dénomination commerciale ACS.

De plus, les valeurs à donner aux différents composants dépendent des caractéristiques du moteur, des vitesses de rotation souhaitées, etc. et sont là aussi adaptables en fonction des applications.

En outre, bien que l'invention s'applique plus particulièrement à une sélection de vitesse entre des valeurs discrètes, il est possible de prévoir un élément variable (par exemple une résistance ou un condensateur variable) dans au moins une des cellules 33ᵢ pour obtenir une variation continue au moins sur une plage de vitesses réglable, par exemple, par l'utilisateur.

Enfin, la génération des signaux de commande des différents commutateurs bidirectionnels, par exemple par un microcontrôleur, fait appel à des outils à la portée de l'homme du métier.

## Revendications

1. Dispositif de commande en vitesse et en sens de rotation d'un moteur asynchrone (1), **caractérisé en ce qu'**il comporte :
un premier circuit (7) comportant deux commutateurs bidirectionnels (T'4, T'5) commandables individuellement dont des premières bornes de conduction sont reliées à une borne commune (6) d'application d'un potentiel continu (Vcc) et dont deux deuxièmes bornes de conduction sont aptes à être respectivement reliées à des premières extrémités (12, 14) d'enroulements (15, 16) du stator du moteur ; et
un deuxième circuit (3') comportant au moins deux commutateurs bidirectionnels (T1, T2, T3) en parallèle et commandables individuellement, dont des premières bornes de conduction respectives (Kᵢ) sont reliées à ladite borne commune, les premier et deuxième circuits étant connectés en série.

2. Dispositif selon la revendication 1, dans lequel un des commutateurs bidirectionnels (T1) du deuxième circuit a sa deuxième borne de conduction (A₁) directement reliée à une borne (22) d'application d'une tension alternative (Vac), les autres commutateurs bidirectionnels (T2, T3) du deuxième circuit ayant leurs deuxièmes bornes de conduction respectives (A₂, A₃) reliées, par une impédance (33₂, 33₃), à cette borne d'application de la tension alternative.

3. Dispositif selon la revendication 1, dans lequel les commutateurs bidirectionnels (T1, T2, T3) du deuxième circuit (3') ont leurs deuxièmes bornes de conduction respectives (Aᵢ) reliées, par une impédance (33ᵢ), à une borne (22) d'application de la tension alternative (Vac).

4. Dispositif selon la revendication 2 ou 3, dans lequel le nombre de commutateurs bidirectionnels (T1, T2) du deuxième circuit est égal au nombre de vitesses de rotation souhaitées pour le moteur (1) moins une, une impédance (33₃) reliant directement ladite borne commune (6) à ladite borne (22) d'application de la tension alternative (Vac).

5. Dispositif selon la revendication 2 ou 3, dans lequel le nombre de commutateurs bidirectionnels (T1, T2, T3) du deuxième circuit (3') est égal au nombre de vitesses de rotation souhaitées pour le moteur (1).

6. Dispositif selon l'une quelconque des revendications 2 à 5, dans lequel des deuxièmes extrémités respectives (11, 13) des enroulements du moteur (1) sont aptes à être connectées ensemble à une autre borne (21) d'application de la tension alternative (Vac), un élément capacitif (C17) reliant leurs premières extrémités respectives.

7. Dispositif selon l'une quelconque des revendications 2 à 6, dans lequel chaque impédance (33ᵢ) comporte au moins un élément capacitif (C33i) en parallèle avec un élément résistif (R'33i).

8. Dispositif selon l'une quelconque des revendications 1 à 7, dans lequel lesdits commutateurs bidirectionnels sont des triacs (T1, T2, T3, T'4, T'5) dont les cathodes (Kᵢ) sont directement reliées à ladite borne commune (6).

9. Dispositif selon l'une quelconque des revendications 1 à 8, dans lequel des bornes de commandes respectives des commutateurs bidirectionnels (T1, T2, T3, T'4, T'5) sont aptes à être reliées à des bornes de sortie (O) d'un circuit (5) de commande fournissant des signaux à deux états.

10. Appareil comportant un moteur asynchrone (1) apte à être alimenté par une tension alternative (Vac) et un dispositif (3', 5, 7) de commande conforme à l'une quelconque des revendications 1 à 9, dans lequel des premières extrémités respectives (12, 14) d'enroulements (15, 16) du stator du moteur sont connectées aux premières bornes de conductions respectives des commutateurs du premier circuit (7).

## Claims

1. A device for controlling the speed and the direction of rotation of an asynchronous motor (1), **characterized in that** it comprises:
a first circuit (7) having two individually-controllable bidirectional switches (T'4, T'5) having first conduction terminals connected to a common terminal (6) of application of a D.C. voltage (Vcc) and having second conduction terminals capable of being respectively connected to first ends (12, 14) of windings (15, 16) of the motor stator; and
a second circuit (3') having at least two individually-controllable bidirectional switches (T1, T2, T3) in parallel, having first respective conduction terminals (Kᵢ) connected to said common terminal, the first and second circuit being connected in series.

2. The device of claim 1, wherein one of the bidirectional switches (T1) of the second circuit has its second conduction terminal (A₁) directly connected to a terminal (22) of application of an A.C. voltage (Vac), the other bidirectional switches (T2, T3) of the second circuit having their second respective conduction terminals (A₂, A₃) connected, by an impedance (33₂, 33₃), to this terminal of application of the A.C. voltage.

3. The device of claim 1, wherein the bidirectional switches (T1, T2, T3) of the second circuit (3') have their second respective conduction terminals (Aᵢ) connected, by an impedance (33i), to a terminal (22) of application of the A.C. voltage (Vac).

4. The device of claim 2 or 3, wherein the number of bidirectional switches (T1, T2) of the second circuit is equal to the number of rotation speeds desired for the motor (1) minus one, an impedance (33₃) directly connecting said common terminal (6) to said terminal (22) of application of the A.C. voltage (Vac).

5. The device of claim 2 or 3, wherein the number of bidirectional switches (T1, T2, T3) of the second circuit (3') is equal to the number of rotation speeds desired for the motor (1).

6. The device of any of claims 2 to 5, wherein second respective ends (11, 13) of the windings of the motor (1) are capable of being connected together to another terminal (21) of application of the A.C. voltage (Vac), a capacitive element (C17) connecting their first respective ends.

7. The device of any of claims 2 to 6, wherein each impedance (33i) comprises at least one capacitive element (C33i) in parallel with a resistive element (R'33ᵢ).

8. The device of any of claims 1 to 7, wherein said bidirectional switches are triacs (T1, T2, T3, T'4, T'5) having their cathodes (Kᵢ) directly connected to said common terminal (6).

9. The device of any of claims 1 to 8, wherein respective control terminals of the bidirectional switches (T1, T2, T3, T'4, T'5) are capable of being connected to output terminals (0) of a control circuit (5) providing two-state signals.

10. A device comprising an asynchronous motor (1) capable of being powered by an A.C. voltage (Vac) and the control device (3', 5, 7) of any of claims 1 to 9, wherein first respective ends (12, 14) of windings (15, 16) of the motor stator are connected to the first respective conduction terminals of the switches of the first circuit (7).

## Patentansprüche

1. Vorrichtung zum Steuern der Geschwindigkeit und der Richtung einer Rotation eines asynchronen Motors (1), **dadurch gekennzeichnet, dass** sie Folgendes aufweist:
einen ersten Schaltkreis (7) mit zwei individuell steuerbaren bidirektionalen Schaltern (T'4, T'5) mit ersten Kontaktieranschlüssen, die mit einem gemeinsamen Anschluss (6) zum Anlegen einer Gleichspannung (Vcc) und mit zweiten Kontaktieranschlüssen, die geeignet sind jeweils mit ersten Enden (12, 14) von Windungen (15, 16) des Stators des Motors verbunden zu werden; und
einen zweiten Schaltkreis (3') mit wenigstens zwei individuell steuerbaren bidirektionalen Schaltern (T1, T2, T3), die parallel sind, mit jeweils ersten Kontaktieranschlüssen (Kᵢ), die mit dem gemeinsamen Anschluss verbunden sind, wobei der erste und der zweite Schaltkreis in Reihe geschaltet sind.

2. Vorrichtung gemäß Anspruch 1, wobei bei einem der bidirektionalen Schalter (T1) des zweiten Schaltkreises der zweite Kontaktieranschluss (A₁) direkt mit einem Anschluss (22) zum Anlegen einer Wechselpannung (Vac) verbunden ist, wobei bei den anderen bidirektionalen Schaltern (T2, T3) des zweiten Schaltkreises ihre jeweiligen zweiten Kontaktieranschlüsse (A₂, A₃) über eine Impedanz (33₂, 33₃) mit dem Anschluss zum Anlegen der Wechselspannung verbunden sind.

3. Vorrichtung gemäß Anspruch 1, wobei bei den bidirektionalen Schaltern (T1, T2, T3) des zweiten Schaltkreises (3') ihre jeweiligen zweiten Kontaktieranschlüsse (Aᵢ) über eine Impedanz (33ᵢ) mit einem Anschluss (22) zum Anlegen der Wechselspannung (Vac) verbunden sind.

4. Vorrichtung gemäß Anspruch 2 oder 3, wobei die Anzahl der bidirektionalen Schalter (T1, T2) des zweiten Schaltkreises gleich der Anzahl der Rotationsgeschwindigkeiten minus 1 ist, die für den Motor gewünscht ist, wobei eine Impedanz (33₃) den gemeinsamen Anschluss (6) direkt mit dem Anschluss (22) zum Anlegen der Wechselspannung (Vac) verbindet.

5. Vorrichtung gemäß Anspruch 2 oder 3, wobei die Anzahl der bidirektionalen Schalter (T1, T2, T3) des zweiten Schaltkreises (3') gleich der Anzahl der Rotationsgeschwindigkeiten ist, die für den Motor (1) gewünscht ist.

6. Vorrichtung gemäß einem der Ansprüche 2 bis 5, wobei jeweilige zweite Enden (11, 13) der Windungen des Motors (1) geeignet sind gemeinsam mit einem weiteren Anschluss (21) zum Anlegen der Wechselspannung (Vac) verbunden zu werden, wobei ein kapazitives Element (C17) deren jeweilige erste Enden verbindet.

7. Vorrichtung gemäß einem der Ansprüche 2 bis 6, wobei jede Impedanz (33ᵢ) wenigstens ein kapazitives Element (C33ᵢ) aufweist, das parallel zu einem ohmschen Element (R'33ᵢ) ist.

8. Vorrichtung gemäß einem der Ansprüche 1 bis 7, wobei die bidirektionalen Schalter TRIACs (T1, T2, T3, T'4, T'5) sind, wobei deren Kathoden (Kᵢ) mit dem gemeinsamen Anschluss (6) direkt verbunden sind.

9. Vorrichtung gemäß einem der Ansprüche 1 bis 8, wobei jeweilige Steueranschlüsse der bidirektionalen Schalter (T1, T2, T3, T'4, T'5) geeignet sind mit Ausgangsanschlüssen (0) eines Steuerschaltkreises (5) verbunden zu sein, der Signale mit zwei Zuständen bereitstellt.

10. Vorrichtung, die einen asynchronen Motor (1), der geeignet ist durch eine Wechselspannung (Vac) angetrieben zu werden, und die Steuervorrichtung (3', 5, 7) nach einem der Ansprüche 1 bis 9, aufweist, wobei jeweilige erste Enden (12, 14) der Windungen (15, 16) des Stators des Motors mit jeweiligen ersten Kontaktieranschlüssen des ersten Schaltkreises (7) verbunden sind.
